# EUROPEAN PATENT APPLICATION

(11) **EP 3 168 616 A1**
(43) Date of publication of application: **17.05.2017**
(21) Application number: 15193943.6
(22) Date of filing: 10.11.2015
(51) Int. Cl.: G01N 31/22, C08F 8/42, C08F 8/44, C08G 77/398

(54) **OPTICALLY ACTIVE CROSS-LINKED POLYMER**

(71) Applicant: PreSens Precision Sensing GmbH, 86633 Neuburg a.d. Donau (DE)
(72) Inventor: KARASYOV, Alexander, 93080 Pentling (DE); RIECHERS, Daniel, 93051 Regensburg (DE); MARTINEZ-FERRERAS, Fernando, 93051 Regensburg (DE); FISCHER, Lorenz, 93051 Regensburg (DE); APOSTOLIDIS, Athanasios, 93055 Regensburg (DE)
(74) Representative: Weickmann, Hans

(57) **Abstract**

The present invention relates to a cross-linked polymer comprising at least one detector group, at least one ionic group and optionally at least one hydrophilic group, as well as a method for its preparation and its use as a sensor and in an analyte sensor assembly.

## Description

The present invention relates to a cross-linked polymer comprising at least one detector group, at least one ionic group and optionally at least one hydrophilic group, as well as a method for its preparation and its use as a sensor and in an analyte sensor assembly.

Sensors for the detection of analytes, e.g. for detecting partial pressures of acidic or basic analytes, are known. Common optical sensors for detecting e.g. sulfur dioxide, ammonia or carbon dioxide use the acidic or basic nature of the analyte that causes a change in the pH-value within the sensor, thereby modifying absorption, fluorescence, polarization and/or luminescence of the respective detector group in the sensor. This optical change allows an optoelectronic detection. The optical sensors are cost efficient, easy to handle, service and read out and mostly insensitive to electromagnetic fields.

The sensors can be in direct physical contact with the liquid or gaseous analyte matrix, which makes it possible to monitor progress in reaction processes, formation of side-products and/or consumption of reagents on a laboratory as well as on an industrial scale in-situ.

Changes in absorption, fluorescence, polarization and/or luminescence of the detector group are identified by commonly used optoelectronic detectors. The light path between the detector group and the optoelectronic detector can be established via a light guiding element or a free optical path. Since sensors located on the inside of transparent sterile containers or flow elements may also be read out by this method, such sensors have disseminated in biotechnology, medical technology, aqua culture and food production.

Optical sensors may be prepared from an emulsion in a hydrophobic and ion-impermeable, but analyte-permeable polymer, wherein the micelles of the emulsion contain an aqueous buffer system as well as a pH-sensitive dye.

US 5,882,936 describes an optical fluorescence-based sensor. The sensor comprises micro-compartments containing the dye in an aqueous buffer solution and optionally osmoregulatory agents in a cross-linked polymeric material. The dye can be absorbed or adsorbed on carrier beads or particles.

US 4,557,900 describes an optical sensor comprising a hydrophilic material particle, which can bear an optical indicator in aqueous solution in its voids. The dye indicator is absorbed on the particle, but not covalently linked to it. The indicator may contain an aqueous buffer.

US 2004/0171094 describes a sensor containing luminescent or fluorescent dyes imbedded in particles of a gas-permeable, but water-impermeable matrix. The particles can be dispersed in a water-permeable hydrophilic polymer matrix.

DE 10 2005 013 198 describes an optochemical sensor membrane based on a dye indicator and sorbents for solid phase extraction. A dye indicator solution is absorbed on a sorbent material particle by non-specific interactions.

WO 2009/140559 describes a multi-layered optical sensing patch comprising a polymer support membrane having an optical sensing composition covalently bound thereto. The modified membrane is swollen with pH buffer compositions before use.

DE 10 2013 108 659 describes an optical sensor comprising an analytic sensitive dye, a buffer solution and substances for adjusting the osmolality. The dye can be contained in a support material.

EP 0 137 157 describes a fluorescence-based optical sensor, which includes a fluorophore being immobilized on a polymer membrane by e.g. electrostatic interactions between the ionic fluorophore and the polymeric material bearing ionic groups (ionomer).

US 7,390,462 describes a fluorescent pH sensor comprising a perylene fluorescent dye, which can be immobilized on an ionomer via ionic interactions.

Quantitative determination of analytes requires a pre-calibration of the sensor systems. Accordingly, quantitative measurements based on predetermined calibration curves require test conditions that are comparable to those used for calibrating the test systems. However, in applications such as in biotechnology, medicine technology, aqua culture and food production, the test conditions may significantly change. It has been observed that changes in the reaction conditions, e.g. in osmolality, humidity and/or temperature, may imbalance the test system, such that a comparison with the precalibrated test system results in false results.

It is known that the sensors of the prior art show significant cross-sensitivity to changes in the osmolality, which directly impacts the buffer system, so that a quantitative determination of an analyte is - if at all - only possible within great tolerances.

A further disadvantage of the sensors as described above is their thermolability. It is known that particularly specific ionic functional groups, such as alkyl ammonium compounds, tend to thermal degradation, e.g. by Hofmann elimination, thereby forming acidic or basic degradation products, which influence the sensor system, such that the pre-calibration becomes invalid. Increased environmental temperatures may also lead to desorption/absorption processes of non-covalently bound dyes, causing a loss of the spatial composition of the buffer/dye system, which may in turn invalidate the pre-calibration. Increased temperatures may, moreover, lead to a degradation of the polymer backbone, thereby modifying its hydrophilicity/hygroscopicity and absorption behavior. Again, such changes in the sensor system may have the consequence that a pre-calibration becomes invalid.

In biotechnology, medicine technology, aqua culture and food production, the optical sensors and sensor assemblies are usually subjected to a sterilization process, particularly superheated steam treatment, before use. Such harsh conditions may lead to changes at the interface between the polymer matrix and the sensor embedded therein, which results in a changed buffer capacity compared to that used for pre-calibration. In turn, a correlation of the test results with the calibration curve becomes invalid.

The objective technical problem underlying the present invention therefore is to overcome the disadvantages associated with known sensors and sensor assemblies and particularly to provide sensors and sensor assemblies that are less sensitive to temperature, humidity and/or osmolality changes.

The objective technical problem is solved by the present invention. In a first aspect, a cross-linked polymer comprising at least one detector group, at least one ionic group and optionally at least one hydrophilic group is provided.

As used herein, a cross-linked polymer is a polymer, wherein the polymer chains are linked with each other, thereby forming a three dimensional polymer network. The polymer chains may be bound by ionic, covalent and/or electrostatic bonds. In a preferred embodiment, a covalently cross-linked polymer is used. Cross-linkage in a polymer can *inter alia* be defined by its degree of cross-linking and/or its swelling capacity.

The degree of cross-linking is defined by the number of cross-link points divided by the number of chemical repeat units of the polymer. The degree of cross-linking can be measured according to Houben Weyl: "Synthesis of Peptides and Peptidomimetics", Georg Thieme Verlag Stuttgart, New York, vol. 22, 2002, p. 676. Usually, the degree of cross-linking of the cross-linked polymer according to the invention is from 0.01 to 0.9, preferably from 0.1 to 0.5.

The degree of cross-linking may also be measured by the swelling capacity of the polymer, that is, by the amount of solvent that can be absorbed by the cross-linked polymer at a certain temperature. The higher the degree of cross-linking, the lower is the swelling capacity, that is, the possibility of absorbing a solvent. The swelling capacity of the cross-linked polymers according to the invention is usually measured in hydrophilic solvents, such as water, methanol or ethanol and the like, particularly water. In a preferred embodiment, the cross-linked polymer of the invention has a swelling capacity of 10 to 70%, preferably 40 to 60%, in solvent, particularly water, at 20 °C, based on the total dry weight of the cross-linked polymer.

By cross-linking the polymer, the overall solvent absorption, e.g. the water absorption, can be controlled, thereby providing a compound that has a standardized and defined morphology even under varying conditions, which is a pre-requisite for calibration procedures.

The polymer according to the present invention can be a polyolefin, polyester, polyurethane, polyether ketone, polysiloxane, polythiourethane, polyamide, polytriazole, poly(meth)acrylate, polystyrene or polyvinylimidazole homo- or copolymer or conjugated polymer, such as a polyphenylene, polythiophene, polythienothiophene, polyfluorene, polycarbazole, polybenzothiadiazole or polyrylene diimide homo- or copolymer. The polymers as mentioned above are prepared by methods commonly known in the art, e.g. by radical polymerization, polycondensation or polyaddition or transition metal catalyzed reactions of the respective monomeric building blocks (monomers). For cross-linking the polymer, monomers may be used, which have at least two or at least three polymerizable groups, such as a vinyl, vinylidene, allyl, isocyanato, cyanato, thiocyanato, styryl, hydroxyl, amine, carboxy, alkyne, azide, boronic acid ester, halogen, trialkoxysilane or silane group. Cross-linking the polymer may also be performed after the polymer has been prepared by commonly known procedures, such as radical reactions, photochemical reactions, chloromethylation, acylation, Mannich reaction and the like. The cross-linked polymer may be synthesized by the commonly known polymerization methods, such as in solution polymerization, emulsion polymerization, dispersion polymerization, bulk polymerization or polycondensation with or without porogens.

According to the present invention, the cross-linked polymer comprises at least one detector group, which is preferably covalently bound to the cross-linked polymer. The detector group is capable of indicating the presence of an analyte. The analyte as used herein may be a gas, an organic or inorganic acid or an organic or inorganic base, particularly HCOOH, CH₃COOH, HCl, CO₂, CO, O₂, H₂S, volatile amines, in particular NH₃ or NMe₃, or/and SO₂. In a preferred embodiment, the detector group is a luminescent, isotropic or anisotropic fluorescent, phosphorescent, light-absorbing or polarizing group.

The detector group preferably comprises a dye. More preferably, the detector group comprises a gas-responsive and/or pH-responsive dye.

The detector group according to the present invention can comprise a compound selected from m-cresol purple, thymolphthalein, o-cresolphthalein, carboxylfluorescein, 4-methylumbelliferone, bromothymol blue, 5'- and 6'-carboxyseminaphthofluorescein (c-SNAFL), 5'- and 6'-carboxyseminaphthorhodafluorescein (c-SNARF), cresol red, 2-(2,4-dinitrophenylazo)-1-naphthol-3,6-disulfonic acid, 7-hydroxycoumarin-4-acetic acid, tris(thenoyltrifluoroacetonato)europium (III), 1-hydroxypyrene-3,6,8-trisulfonic acid, neutral red, phenol red, rhodamine 6G, sulforhodamine 101, thymol blue, texas red hydrazide, bromophenol blue, bromocresol green, bromocresol purple, eosin Y, 2',7'-dichlorofluorescein, oregon green, 3-substiuted 7-hydroxycoumarin and a salt or derivative thereof.

The detector group can be introduced into the polymer backbone via suitable monomers during polymerization or may be introduced into the (cross-linked) polymer by chemical conversion according to methods known in the art. In a preferred embodiment, the detector group is present in a molar amount of 0.001 to 10%, more preferably 0.01 to 0.1%, based on the overall molar amount of monomers forming the cross-linked polymer.

The ionic group of the cross-linked polymer according to the present invention, which is preferably covalently bound to the cross-linked polymer, preferably comprises an anionic group, in particular a carboxylate, phosphonate or sulfonate group. In this case, the corresponding counter ion can be a cation, such as an alkaline or earth alkaline metal ion, e.g. Na⁺, K⁺, NH₄⁺ or Ca²⁺. Alternatively, the ionic group can comprise a cationic group, in particular a quaternized nitrogen or phosphorus bearing group. In this case, the corresponding counter ion can be an anion, such as a halogen, e.g. Cl⁻, Br⁻, I⁻, OH⁻, HCO₃⁻, acetate, propionate, tetrafluoroborate or hexafluorophosphate.

The ionic group is particularly selected from imidazolinium, imidazolium, pyrazolium, pyrrolium, pyrollidinium, pyridinium, piperidinium, pyrimidinium, amidinium, guanidinium, ammonium and phosphonium.

The ionic group can be introduced into the polymer backbone via suitable monomers during polymerization or may be introduced into the (cross-linked) polymer by chemical conversion according to methods known in the art. In a preferred embodiment, the ionic group is present in a molar amount of 0.001 to 90%, more preferably 0.01 to 50%, even more preferably 1 to 25%, based on the overall molar amount of monomers forming the cross-linked polymer. The ionic group in the cross-linked polymer may on the one hand act as a hygroscopic group that assures a certain swelling level by water and on the other hand act as a buffer compound. Thus, the ionic group is capable of providing a buffer system in an aqueous or humid environment.

The cross-linked polymer may further comprise at least one hydrophilic group, which is preferably covalently bound to the cross-linked polymer. The hydrophilic group preferably comprises at least one primary, secondary or tertiary amine, hydroxy, C₁-C₄-alkoxy or poly(C₁-C₆-alkylenoxide), such as a polyethylene glycol, polypropylene glycol, carboxylic acid, sulfinic acid or sulfonic acid group.

The hydrophilic group can be introduced into the polymer backbone via suitable monomers during polymerization or may be introduced into the (cross-linked) polymer by chemical conversion according to methods known in the art. In a preferred embodiment, the hydrophilic group is present in a molar amount of 0 to 20%, more preferably 0.01 to 15%, even more preferably 0.1 to 10%, based on the overall molar amount of monomers forming the cross-linked polymer.

The hydrophilic group can further enhance the hygroscopicity of the cross-linked polymer, thereby assuring a uniformly swollen cross-linked polymer over a broad range of test conditions.

In a preferred embodiment, the cross-linked polymer of the invention comprises at least one detector group, at least one ionic group and at least one hydrophilic group.

The cross-linked polymer according to the present invention may be present in the form of a particle, a film or a membrane.

The present invention also relates to a method for preparing a cross-linked polymer by polymerizing
(i) at least one monomer according to Formula I

   W(-R⁴(-A)ₙ)ₘ,
(ii) at least one monomer according to Formula II

   X(-R⁴(-A)ₙ)ₘ,
(iii) optionally at least one monomer according to Formula III R⁵(-R⁴(-A)ₙ)ₘ,
(iv) optionally at least one monomer according to Formula IV Y(-R⁴(-A)ₙ)ₘ and
(v) optionally at least one monomer according to Formula V

   Z(-R⁴(-A)ₙ)ₘ,

   wherein
   A is a polymerizable group independently selected from 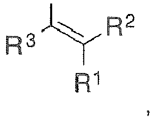 -N=C=O, -N=C=S, -Si(O-R⁶)₃, -Si(R⁶)₂H, -C(O)Cl, -C(O)OR⁶, -B(OR⁶)₂, -NH-R⁶, -OH, halogen, -C≡C-R⁶ and -N₃,
   n and m are each independently an integer from 1 to 4,
   R¹ to R³ are each independently selected from H, C₁-C₁₀-alkyl and C₃-C₁₀-cycloalkyl,
   R⁴ is a chemical bond or a di- to pentavalent organic group selected from C₁-C₁₀-alkyl, C₃-C₁₀-cycloalkyl, C₂-C₁₀-heterocyclyl, C₆-C₁₄-aryl, C₅-C₁₀-heteroaryl, C₇-C₁₂-alkylaryl, -C(O)-, -C(O)O-, -C(O)NR⁶-, -SO₂- and -SO-, optionally substituted with C₁-C₁₀-alkyl or C₂-C₁₀-heterocyclyl,
   R⁵ is selected from H, halogen, C₁-C₁₀-alkyl, C₁-C₁₀-haloalkyl, C₃-C₁₀-cycloalkyl, C₂-C₁₀-heterocyclyl, C₆-C₁₀-aryl, C₅-C₁₀-heteroaryl, C₇-C₁₂-alkylaryl, nitrile, -CH₂OR⁶, -C(O)R⁶, -C(O)OR⁶, -C(O)NR⁶R⁷, -S(O)NR⁶R⁷ and -S(O)₂NR⁶R⁷,
   R⁶ and R⁷ are each independently selected from H, C₁-C₁₀-alkyl and C₁-C₁₀-haloalkyl or R⁶ and R⁷ together with the nitrogen atom form a 5-8-membered ring, optionally containing up to 2 heteroatoms,
   W comprises at least one detector group,
   X comprises at least one ionic group or at least one precursor of an ionic group,
   Y comprises at least one cross-linkable group,
   Z comprises at least one hydrophilic group.

In a preferred embodiment, n is an integer from 1 to 2, more preferred 1. In a preferred embodiment m is an integer from 1 to 3, more preferred 1. In a preferred embodiment, A is 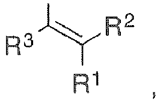 -N=C=O, -C(O)Cl, -C(O)OR⁶ , -NH-R⁶ or OH. In a more preferred embodiment, A is 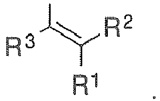 In an even more preferred embodiment, A is

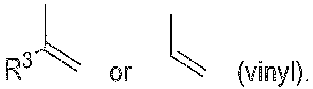

In a preferred embodiment, R¹-R³ are each independently selected from H, C₁-C₁₀-alkyl, preferably C₁-C₄-alkyl, and C₃-C₁₀-cycloalkyl, preferably C₅-C₆-cyclolalkyl. In a more preferred embodiment R¹-R³ are H.

In a preferred embodiment, R⁴ is a chemical bond or a di- to pentavalent, more preferably di- to trivalent, even more preferably divalent, organic group selected from C₁-C₁₀-alkyl, preferably C₁-C₄-alkyl, C₆-C₁₄-aryl, preferably C₆-C₁₀-aryl, and C₇-C₁₂-alkylaryl, preferably C₇-C₁₀-alkylaryl, optionally substituted with C₂-C₁₀-heterocyclyl, preferably C₄-C₆-heterocyclyl.

In a preferred embodiment, R⁵ is C₆-C₁₀-aryl, C₇-C₁₂-alkylaryl, preferably C₇-C₁₀-alkylaryl, C₂-C₁₀-heterocyclyl, preferably C₄-C₆-heterocyclyl, nitrile, -C(O)OR⁶ or -C(O)NR⁶R⁷.

In a preferred embodiment, R⁶ and R⁷ are each independently selected from H and C₁-C₁₀-alkyl, preferably C₁-C₄-alkyl, or R⁶ and R⁷ together with the nitrogen atom form a 5- to 8-, preferably 5- to 6-membered ring, optionally containing up to 2 heteroatoms.

As used herein, the term *"alkyl*" or the alkyl defined by the number of carbon atoms, e.g. *"C₁-C₁₀-alkyl",* means a linear or branched saturated hydrocarbon residue (having the indicated number of carbon atoms). *"Cycloalkyl"* as used herein refers to alkyl residues forming at least a 4- to 8-membered ring, preferably a 5- to 6-membered ring. As used herein, the term *"aryl"* is an aromatic ring structure, such as phenyl, naphthyl, anthryl or phenanthryl. *"Heteroaryl"* as used herein refers to aromatic ring structures having at least one heteroatom, such as O, S or N, within the ring. Preferred embodiments of heteroaryl are e.g. furyl, thienyl, pyridyl, pyrrolyl or indolyl. *"Alkylaryl"* as used herein refers to aryl substituents, which may be further substituted with alkyl. *"Halogen"* refers to fluorine, chlorine, bromine or iodine. *"Haloalkyl"* refers to alkyl substituents, which are one or more times substituted with halogen. *"Heterocyclyl"* as used herein refers to non-aromatic ring structures containing at least one heteroatom, such as O, S or N. Preferred examples of heterocyclyls are tetrahydrofuran, tetrahydropyran, pyrrolidine, piperidine, piperazine or morpholine. *"Heteroatom"* as used herein refers to atoms other than carbon, particularly O, S or N.

The detector group, the ionic group and the hydrophilic group are as defined above.

In an alternative, the monomer according to formula II may comprise a precursor of an ionic group, that is, a group that can be converted by chemical modification into an ionic group as defined above. In particular, a precursor of an ionic group can be a neutral group, which is converted to an ionic group, namely an anionic or cationic group, by chemical modification, e.g. (de)protonation or alkylation. Preferably, the precursor of an ionic group can be selected from an imidazoline, imidazole, pyrazole, pyrrole, pyrrolidine, pyridine, piperidine, pyrimidine, amidine, guanidine, amine and phosphor.

In a preferred embodiment, the monomer according to Formula II comprises a precursor of an ionic group if polymerization of the monomers is hampered or not possible in the presence of the ionic group *per se.*

According to the invention, the cross-linkable group may be any group, which provides a polymerizable functional group that is capable of generating a cross-link within the polymer. The polymerizable group may preferably be a vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group.

In a preferred embodiment, the monomer according to Formula I has the formula W-R⁴-A, W(-R⁴-A)₂ or W(-R⁴-A)₃, wherein R⁴ preferably is a chemical bond or a divalent organic group selected from C₁-C₄-alkyl, C₆-C₁₀-aryl and C₇-C₁₀-alkylaryl, optionally substituted with C₄-C₆-heterocyclyl. A preferred monomer of Formula I is selected from the following compound: 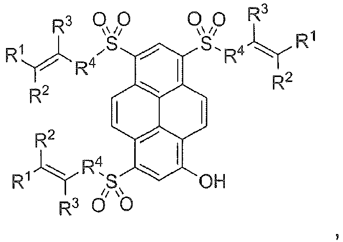 wherein R¹, R², R³ and R⁴ are each independently as defined above. In a more preferred embodiment of the above indicated compounds, R¹, R² and R³ are H and R⁴ is C₇-C₁₀-alkylaryl, optionally substituted with C₄-C₆-heterocyclyl. In a preferred embodiment, the monomer according to Formula I is

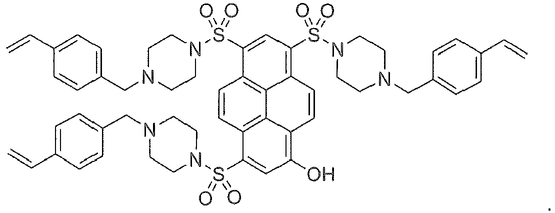

In a preferred embodiment, the monomer of Formula I can simultaneously act as a cross-linking agent. To act as a cross-linking agent, the monomer of Formula I preferably comprises at least one additional vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group, more preferably a vinyl, vinylidene, styryl or allyl group.

Preferably, the monomer according to Formula I is present in a molar amount of 0.001-2%, more preferably 0.01-1%, based on the overall molar amount of monomers forming the cross-linked polymer.

In preferred embodiments, the monomer of Formula II is X-R⁴-A or X(-R⁴-A)₂, wherein R⁴ preferably is a chemical bond or a divalent organic group selected from C₁-C₄-alkyl, C₆-C₁₀-aryl and C₇-C₁₀-alkylaryl, optionally substituted with C₄-C₆-heterocyclyl. The most preferred monomers of Formula II are selected from the following compounds 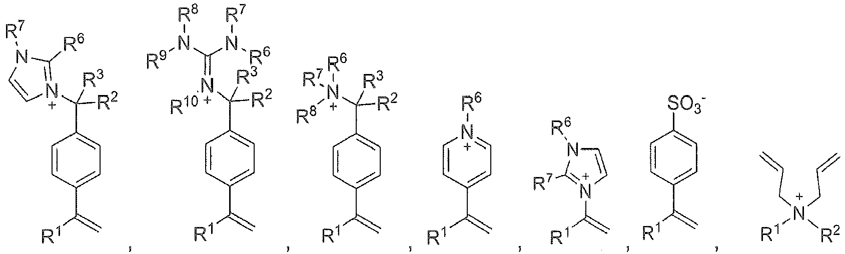 and 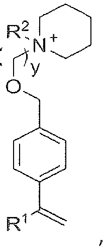 wherein R¹, R² and R³ are each independently as defined above and R⁶, R⁷, R⁸, R⁹ and R¹⁰ are each independently defined according to the definition of R¹ to R³ and y is an integer from 1 to 20, preferably 1 to 5, more preferably 1 to 4, even more preferably 1. In a more preferred embodiment, the monomers of Formula II are selected from the following compounds 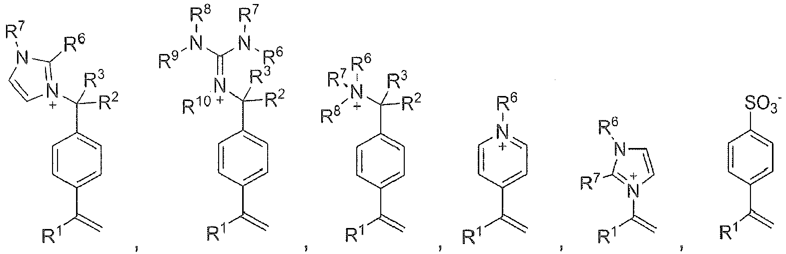 and 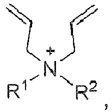 wherein R¹ is H and R², R³, R⁶, R⁷, R⁸, R⁹ and R¹⁰ are each independently H, C₁-C₄-alkyl or C₅-C₆-cycloalkyl. In a particularly preferred embodiment, the monomers of Formula II are

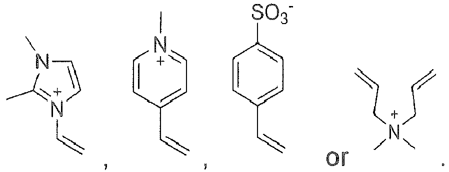

In a preferred embodiment, the monomer of Formula II can simultaneously act as a cross-linking agent. To act as a cross-linking agent, the monomer of Formula II preferably comprises at least one additional vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group, more preferably a vinyl, vinylidene, styryl or allyl group.

Preferably, the monomer according to Formula II is present in a molar amount of 0.001-90%, more preferably 0.01-80%, based on the overall molar amount of monomers forming the cross-linked polymer.

Preferred embodiments of the monomers according to Formula III are R⁵-R⁴-A or R⁵(-R⁴-A)₂, wherein R⁴ preferably is a chemical bond or a divalent organic group selected from C₁-C₄-alkyl, C₆-C₁₀-aryl and C₇-C₁₀-alkylaryl, optionally substituted with C₄-C₆-heterocyclyl, and R⁵ is C₆-C₁₀-aryl, C₇-C₁₀-alkylaryl, C₄-C₆-heterocyclyl, nitrile, -C(O)OR⁶ or -C(O)NR⁶R⁷. The most preferred monomers of Formula III are selected from the following compounds 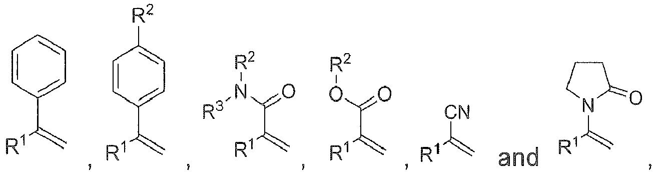 wherein R¹, R² and R³ are each independently as defined above, preferably R¹ is H and R² and R³ are H, C₁-C₄-alkyl or C₅-C₆-cycloalkyl. In a particularly preferred embodiment, the monomers of Formula III are selected from

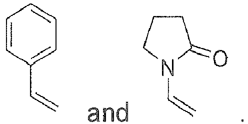

In a preferred embodiment, the monomer according to Formula III can simultaneously act as a cross-linking agent. To act as a cross-linking agent, the monomer of Formula III preferably comprises at least one additional vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group, more preferably a vinyl, vinylidene, styryl or allyl group.

Preferably, the monomer according to Formula III is present in a molar amount of 0-90%, more preferably 20-80%, even more preferably 60-75%, based on the overall molar amount of monomers forming the cross-linked polymer.

Preferred embodiments of the monomer according to Formula IV are Y-R⁴-A or Y(-R⁴-A)₂, wherein R⁴ preferably is a chemical bond or a divalent organic group selected from C₁-C₄-alkyl, C₆-C₁₀-aryl and C₇-C₁₀-alkylaryl, optionally substituted with C₄-C₆-heterocyclyl, and Y comprises at least one additional vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group, more preferably a vinyl, vinylidene, styryl or allyl group.

The most preferred monomers of Formula IV are selected from the following compounds 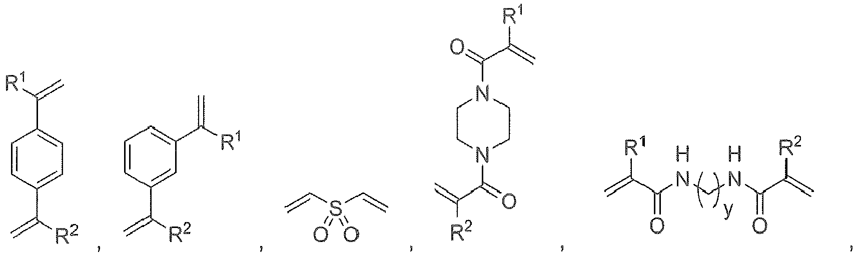 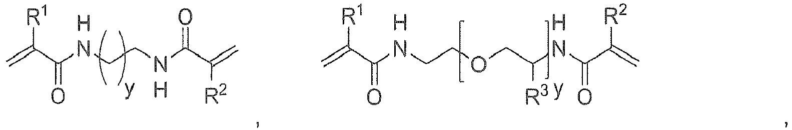 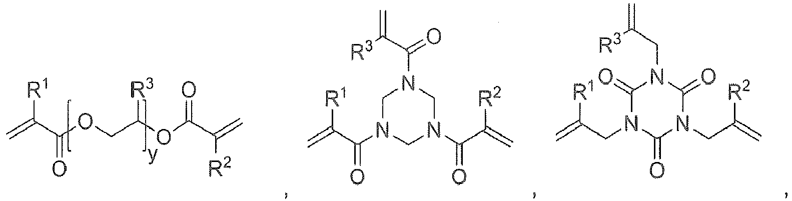 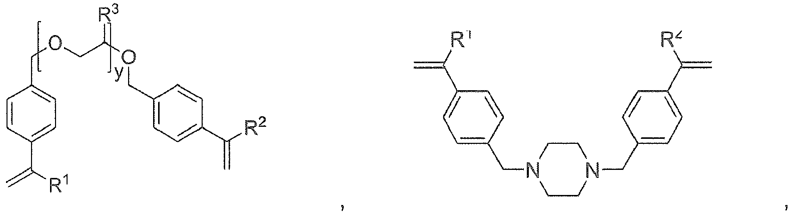 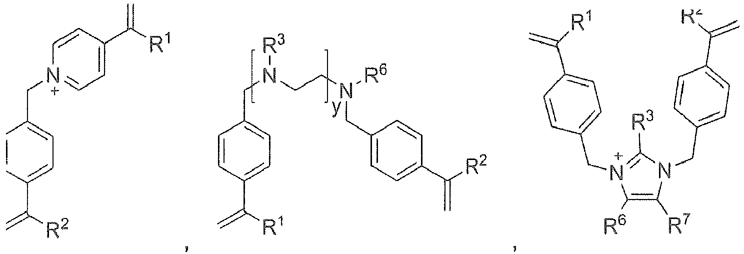 and 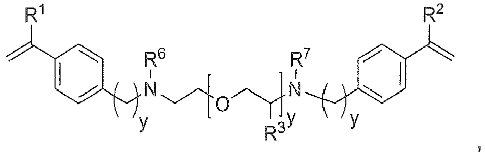 wherein R¹, R², R³, R⁶ and R⁷ are each independently as defined above and y is each independently an integer from 1 to 20, preferably 1 to 5, more preferably 1 to 4, even more preferably 1. In a more preferred embodiment, the monomers of Formula IV are selected from 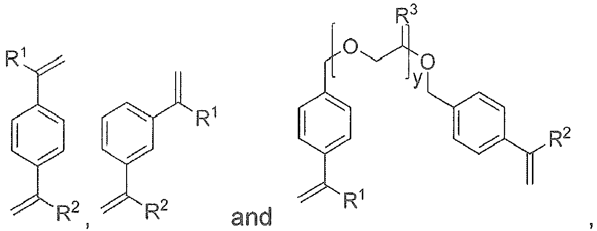 wherein preferably R¹, R² and R³ are each independently as defined above and y is an integer from 1 to 5, preferably 1 to 4, even more preferably 1. In a particularly preferred embodiment, the monomers of Formula IV are 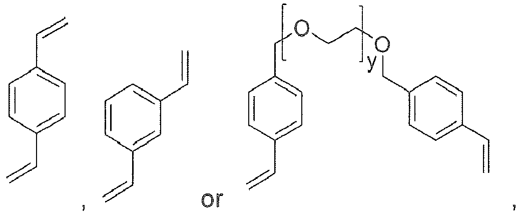 wherein y is an integer from 1 to 5, preferably 1 to 4, even more preferably 1.

Preferably, the monomer according to Formula IV is present in a molar amount of 0-15%, more preferably 0.01-12%, even more preferably 4-10%, based on the overall molar amount of monomers forming the cross-linked polymer.

Preferred embodiments of the monomer according to Formula V are Z-R⁴-A or Z(-R⁴-A)₂, wherein R⁴ preferably is a chemical bond or a divalent organic group selected from C₁-C₄-alkyl, C₆-C₁₀-aryl and C₇-C₁₀-alkylaryl, optionally substituted with C₄-C₆-heterocyclyl. The most preferred monomers of Formula V are selected from the following compounds 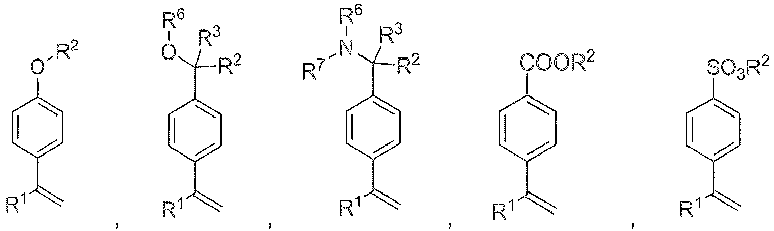 and 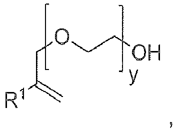 wherein R¹, R², R³, R⁶ and R⁷ and y are each independently as defined above. In a preferred embodiment, the monomers of Formula V are selected from 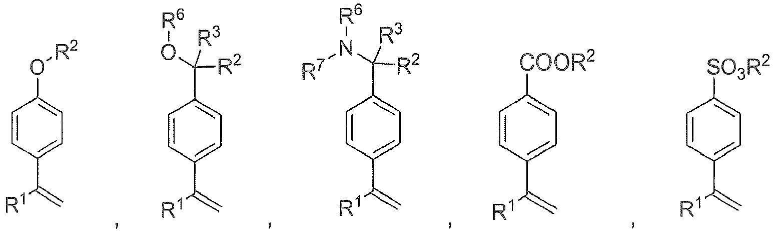 and 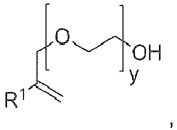 wherein R¹, R² and R³ are H and R⁶ and R⁷ are each independently H, C₁-C₄-alkyl or C₅-C₆-cycloalkyl and y is an integer from 1 to 5, preferably 1 to 4, even more preferably 1. In a particularly preferred embodiment, the monomer of Formula V is 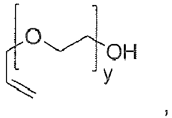 wherein y is an integer from 1 to 5, preferably 1 to 4, even more preferably 1.

In a preferred embodiment, the monomer according to Formula V can simultaneously act as a cross-linking agent. To act as a cross-linking agent, the monomer of Formula V preferably comprises at least one additional vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group, more preferably a vinyl, vinylidene, styryl or allyl group.

Preferably, the monomer according to Formula V is present in a molar amount of 0-20%, more preferably 0.01-15%, even more preferably 4-10%, based on the overall molar amount of monomers forming the cross-linked polymer.

In another embodiment of the invention, a cross-linked polymer is prepared by polymerizing
(i) at least one monomer according to Formula I

   W(-R⁴(-A)ₙ)ₘ,
(ii) at least one monomer according to Formula II

   X(-R⁴(-A)ₙ)ₘ,
(iii) at least one monomer according to Formula III

   R⁵(-R⁴(-A)ₙ)ₘ,
(iv) optionally at least one monomer according to Formula IV Y(-R⁴(-A)ₙ)ₘ and
(v) optionally at least one monomer according to Formula V

   Z(-R⁴(-A)ₙ)ₘ,
wherein Formulae I to V are as defined above.

Preferably, a cross-linked polymer is prepared by polymerizing
(i) at least one monomer according to Formula I

   W(-R⁴(-A)ₙ)ₘ,
(ii) at least one monomer according to Formula II

   X(-R⁴(-A)ₙ)ₘ,
(iii) at least one monomer according to Formula III

   R⁵(-R⁴(-A)ₙ)ₘ,
(iv) optionally at least one monomer according to Formula IV Y(-R⁴(-A)ₙ)ₘ and
(v) at least one monomer according to Formula V

   Z(-R⁴(-A)ₙ)ₘ,
wherein Formulae I to V are as defined above.

In another embodiment, a cross-linked polymer is prepared by polymerizing
(i) at least one monomer according to Formula I

   W(-R⁴(-A)ₙ)ₘ,
(ii) at least one monomer according to Formula II

   X(-R⁴(-A)ₙ)ₘ,
(iii) at least one monomer according to Formula III

   R⁵(-R⁴(-A)ₙ)ₘ,
(iv) at least one monomer according to Formula IV

   Y(-R⁴(-A)ₙ)ₘ and
(v) optionally at least one monomer according to Formula V

   Z(-R⁴(-A)ₙ)ₘ,
wherein Formulae I to V are as defined above.

In another embodiment, a cross-linked polymer is prepared by polymerizing
(i) at least one monomer according to Formula I

   W(-R⁴(-A)ₙ)ₘ,
(ii) at least one monomer according to Formula II

   X(-R⁴(-A)ₙ)ₘ,
(iii) at least one monomer according to Formula III

   R⁵(-R⁴(-A)ₙ)ₘ,
(iv) at least one monomer according to Formula IV

   Y(-R⁴(-A)ₙ)ₘ and
(v) at least one monomer according to Formula V

   Z(-R⁴(-A)ₙ)ₘ,
wherein Formulae I to V are as defined above.

The monomers can be polymerized according to methods common in the field. Preferably, the monomers are polymerized via radical, cationic, anionic, transition metal catalyzed, condensation or addition polymerization. The polymerization may be performed in bulk, emulsion, dispersion or solution. Preferably, a radical polymerization is performed, particularly in an emulsion polymerization. In this type of polymerization, almost or completely spherical particles are formed, the size of which can be controlled by methods known to the skilled person. Additionally, a porogen, such as dimethylformamide (DMF), dioxane, hexane, toluene, hexadecane, 1-chlorodecane, 1-chlorododecane, tetrahydroquinoline or polyethylene glycol, can be added before the polymerization step to facilitate the formation of pores of a certain size. If the polymers contain precursors of ionic groups, these precursors can, after complete polymerization, be converted to ionic groups by suitable reactions as described above.

In preferred embodiments of the method of the invention, respective monomers are polymerized simultaneously or sequentially, more preferred simultaneously.

In another embodiment, the polymer can be prepared in a two-step process. For this purpose, in a first polymerization step, a polymer is formed from at least one of the monomers selected from Formula II and optionally Formula III. In a second step, at least one of the monomers selected from Formula I and optionally from Formulae II, III, IV or V is contacted with the polymer obtained in the first step and polymerized. In one alternative, the polymer obtained in the first step and the polymer obtained in the second step are covalently bound to each other, thereby forming a cross-linked polymer of the invention. In another alternative, the polymer obtained in the second step is physically integrated within the polymer obtained in the first step, thereby forming a physical network, representing a polymer composition, e.g. comprising two different polymers.

Thus, in another aspect, the present invention relates to a polymeric composition comprising at least one detector group, at least one ionic group and optionally at least one hydrophilic group, wherein the detector group, the ionic group and the hydrophilic group are as defined above. In a preferred embodiment, the polymer composition comprises at least two different polymers. The polymer composition according to the present invention preferably comprises two polymers, which together comprise at least one detector group, at least one ionic group and optionally at least one hydrophilic group. In a preferred embodiment, one of the polymers comprises at least one detector group, which is covalently bound to the polymer. The at least one other of the polymers preferably comprises at least one ionic group, which is covalently bound to said polymer. The different polymers within the polymer composition may further, independent of each other, comprise at least one repeating unit obtained from polymerizing at least one of the monomers according to Formulae III, IV and/or V as defined above. At least one of the polymers within the polymer composition preferably is cross-linked.

The polymer composition may be obtained by blending of the different polymers or via the two-step procedure as described above.

The obtained polymer or polymer composition can be processed further, for example by milling, monomer extraction, such as Soxhlet extraction in organic solvents (e.g. hexane, dioxane, methanol, THF), or acid or base treatment with e.g. sulfuric acid or alkali hydroxide.

The cross-linked polymer or the polymer composition according to the present invention may be immobilized on a support material. Suitable support materials are woven or non-woven materials, mesh materials or natural or synthetic particles or fibers. The immobilization of the polymer(s) to the support material can be effected after the polymer(s) have been polymerized by suitable techniques known in the art, e.g. hot lamination. Alternatively, the polymerization process may be performed in the presence of the support material, thereby impregnating the support material with the respective polymer(s).

The cross-linked polymer, the cross-linked polymer obtainable by the method described above or the polymer composition according to the invention may be used as a sensor. The sensor changes its absorption, fluorescence, polarization and/or luminescence properties in the presence of an analyte, wherein the respective change can be detected optoelectronically, e.g. by generic laboratory spectrofluorimeters or dedicated optoelectronics tailored for the spectral characteristics of the dye.

In a further aspect, the present invention relates to an analyte sensor assembly comprising a) the cross-linked polymer as described above or the polymer composition as described above and b) a hydrophobic matrix polymer.

The hydrophobic matrix polymer is particularly analyte-permeable and even more particularly analyte-permeable and ion-impermeable. The hydrophobic matrix polymer is preferably selected from a fluorine-containing polymer, silicone, polyurethane, ethylcellulose, polybutadiene, polyvinyl methylketone, polyvinyl chloride, poly(trimethylsilyl)propyne, poly-t-butylstyrene, polystyrene, poly-4-methylstyrene, poly-alpha-methylstyrene, cellulose acetate butyrate and polyisoprene.

In a preferred embodiment, the cross-linked polymer or the polymer composition is embedded within the hydrophobic matrix polymer. Hence, the hydrophobic matrix may protect the cross-linked polymer or the polymer composition from the surrounding analyte matrix without influencing the diffusion of the analytes.

According to the present invention, the cross-linked polymer or polymer composition is preferably covalently bound to the hydrophobic matrix polymer. It has been observed that a covalent bonding of the hydrophobic matrix with the cross-linked polymer or polymer composition avoids the formation of micro-channels at the interface of the hydrophobic matrix and the cross-linked polymer. Such micro-channels allow undesired incorporation of water at the interface between hydrophobic matrix and sensor material, which might invalidate pre-calibration of the analyte sensor assembly, due to changed buffer capacities.

In the analyte sensor assembly, the cross-linked polymer or polymer composition is preferably present in an amount of 0.01-30 wt.%, more preferably 20-30 wt.%, more preferably 10-28 wt.% and even more preferably 15-25 wt.%, based on the total amount of the cross-linked polymer or polymer composition and the hydrophobic matrix polymer.

The analyte sensor assembly can further comprise a support material, in particular an inert support material, which can increase the mechanical stability of the analyte sensor assembly. Preferably, the support material can be a woven or non-woven material, a mesh material or a natural or synthetic particle. Preferably, the support material is impregnated with the cross-linked polymer and/or polymer composition and embedded within the hydrophobic matrix polymer.

The analyte sensor assembly can have any shape, thickness and/or form suitable for use e.g. in a reactor or container. Preferably, the analyte sensor assembly can have a thickness of 2 to 500 µm, more preferably of 5 to 300 µm, even more preferably of 10 to 150 µm and most preferably of up to 100 µm.

The analyte sensor assembly according to the present invention can be produced by a method comprising the steps of (1) providing the cross-linked polymer and/or the polymer composition according to the present invention, (2) contacting the cross-linked polymer or polymer composition of step (1) with a hydrophobic matrix monomer or prepolymer and (3) polymerizing and/or cross-linking the hydrophobic matrix monomer and/or prepolymer.

Preferably, the method further comprises a step (1a) and optionally (1 b) before the above described step (2), wherein in step (1a), the cross-linked polymer and/or polymer composition is activated, e.g. by plasma treatment, in particular by low pressure oxygen plasma or argon plasma, and in step (1 b), the activated cross-linked polymer and/or polymer composition is optionally modified with a functional group, which is capable of reacting with the hydrophobic matrix monomer and/or prepolymer.

The functional group that is capable of reacting with the hydrophobic matrix monomer and/or prepolymer can comprise unsaturated alkenes, in particular unsaturated dienes and the like. These compounds usually form covalent bonds with the activated cross-linked polymer and/or polymer composition by contact under standard conditions. The functional group may then preferably be reacted with the hydrophobic matrix monomer and/or prepolymer via known methods, such as transition metal catalyzed reactions, such as hydrosilylation or metathesis, photocatalyzed reactions or radical reactions.

The analyte sensor assembly of the present invention can be used for detecting the presence of an analyte, e.g. an organic or inorganic acid, an organic or inorganic base or a gas, in particular HCOOH, CH₃COOH, HCl, CO₂, CO, volatile amines, in particular NMe₃ or NH₃, or/and SO₂.

It has been found that the sensors and sensor assemblies according to the invention have an exactly controlled configuration over a broad range of testing conditions. On the one hand, the presence of ionic and optionally hydrophilic groups in the polymers provides a minimum of water absorption, thereby providing the required buffer system. On the other hand, swelling is limited by a certain degree of cross-linking. The sensors of the invention are thus extremely insensitive to excessive solvent swelling and osmolality changes of the analyte matrix. The structure of the polymers, moreover, prevents any undesired processes, such as degradation or desorption/absorption processes caused by significant temperature changes. The properties of the sensors according to the invention hence allow a pre-calibration, which is valid over a broad temperature, humidity and osmolality range, even if subjected to harsh pre-treatments, such as sterilization processes.

### Examples

### 1. One-pot reaction

A mixture of styrene (5 g), 2,3-dimethyl-1-vinyl-imidazolium-chloride (4 g), pH-responsive detector monomer I (3,6,8-tris({4-[(4,10-ethenylphenyl)methyl]piperazin-1-yl}sulfonyl)pyren-1-ol) (0.3 g), optionally 1-ethenyl-4[2-[2-[2-[(4-ethenyl-phenyl)methoxy]ethoxy]ethoxy]ethoxymethyl]benzene (1 g), optionally 1,2-bis(4-vinylbenzyloxy)ethane (1 g) and optionally 1-chlorodecane (1 g) was mixed with AlBN (0.25 g) in a glass flask and was then reacted in 70 ml of dioxane at 75 °C for 12 h under an inert atmosphere. After completion of the reaction, the resulting cross-linked polymer was extracted in a Soxhlet apparatus with ethanol. Subsequently, the purified cross-linked polymer was dried under vacuum to give 9 g of the cross-linked polymer.

After drying, the resulting cross-linked polymer was milled with an IKA mill to result in a mean particle size of 80 µm.

### 2. Emulsion polymerization

A mixture of styrene (4 g), 2,3-dimethyl-1-vinyl-imidazolium-chloride (4 g), pH-responsive detector monomer (3,6,8-tris({4-[(4-ethenylphenyl)methyl]piperazin-1-yl}sulfonyl)pyren-1-ol) (0.3 g), optionally 1-ethenyl-4[2-[2-[2-[(4-ethenyl-phenyl)methoxy]ethoxy]ethoxy]ethoxymethyl]benzene (1 g), optionally 1,2-bis(4-vinylbenzyloxy)ethane (1 g) and optionally 1-chlorodecane (1 g) was mixed with a solution of dioctyl sodium sulfosuccinate (AOT) (1 g) in water (80 ml) to form a disperse solution. Then, AlBN (0.25 g) was added and the resulting mixture was reacted at 75 °C for 12 h under an inert atmosphere. The resulting cross-linked polymer was subsequently separated from the aqueous phase and then extracted in a Soxhlet apparatus with ethanol. The purified cross-linked polymer was dried under vacuum to give 8 g of the cross-linked polymer.

The resulting spherical cross-linked polymer showed a degree of cross-linking of 0.1 and a mean particle size of 200 nm.

### 3. Emulsion polymerization using an ionic precursor monomer

A mixture of styrene (4 g), 2,3-dimethyl-1-vinyl-imidazol (4 g), pH-responsive detector monomer (3,6,8-tris({4-[(4-ethenylphenyl)methyl]piperazin-1-yl}sulfonyl)pyren-1-ol) (0.3 g), optionally 1-ethenyl-4[2-[2-[2-[(4-ethenyl-phenyl)methoxy]ethoxy]ethoxy]ethoxymethyl]benzene (1 g), optionally 1,2-bis(4-vinylbenzyloxy)ethane (1 ml) and optionally 1-chlorodecane (1 ml) was mixed with water to form a disperse solution. Then, AlBN (0.3 g) was added and the resulting mixture was reacted at 75 °C for 12 h under an inert atmosphere. The resulting cross-linked polymer was extracted in a Soxhlet apparatus with ethanol. Then, iodomethane (10 ml) in acetonitrile was added to the purified cross-linked polymer and stirred at room temperature for 72 h under an inert atmosphere. The resulting ionic cross-linked polymer was extracted in a Soxhlet apparatus with ethanol. Then, the ionic cross-linked polymer was dried under vacuum to give 7 g of the cross-linked polymer.

The resulting spherical cross-linked polymer showed a degree of cross-linking of 0.1 and a mean particle size of 200 nm.

### 4. Stepwise polymerization

A mixture of styrene (4 g), 2,3-dimethyl-1-vinyl-imidazolium chloride (4 g), optionally 1-ethenyl-4[2-[2-[2-[(4-ethenyl-phenyl)methoxy]ethoxy]ethoxy]ethoxymethyl]benzene (1 g), optionally 1,2-bis(4-vinylbenzyloxy)ethane (1 g) and optionally 1-chlorodecane (1 g) was mixed with AlBN (0.3 g) in a glass flask and reacted at 75 °C for 12 h under an inert atmosphere. The resulting polymer (I) was subsequently extracted in a Soxhlet apparatus with ethanol. The purified polymer (I) was dried under vacuum to give 6 g of the polymer (I).

Dioxane was added to polymer (I) in a glass flask and the mixture was swollen for 3 h at room temperature. Then, a solution of pH-responsive detector monomer (3,6,8-tris({4-[(4-ethenylphenyl)methyl]piperazin-1-yl}sulfonyl)pyren-1-ol) (0.3 g), styrene (4 g), optionally 1-ethenyl-4[2-[2-[2-[(4-ethenyl-phenyl)methoxy]ethoxy]ethoxy]ethoxymethyl]benzene (1 g) and optionally 1,2-bis(4-vinylbenzyloxy)ethane (2 g) and AlBN (0.3 g) was added to the mixture containing the swollen polymer (I) in dioxane. The resulting mixture was reacted at 75 °C for 12 h under an inert atmosphere. The resulting polymer (II) was extracted in a Soxhlet apparatus with ethanol and then dried under vacuum to give 8 g of the polymer (II).

The resulting polymer showed a degree of cross-linking of 0.1 and a mean particle size of 200 nm.

### 5. Plasma treatment

Each cross-linked polymer of Examples 1-4 was treated with low-pressure oxygen or argon plasma at 0.25 mbar and 500 watt plasma generator power setting for 10 minutes using a Diener Tetra 100 plasma machine with powder treatment unit. Then, the activated cross-linked polymer was treated for 5 minutes with 1,5-hexadien or 1,7-octadien under plasma grafting conditions at 0.30 mbar and 100 watt plasma generator power setting in pulse mode (50% duty cycle, 1 second pulse length). The resulting cross-linked polymer particles can be dispersed in vinyl-terminated silicones like Gelest DMS-V31 (vinyl-terminated polydimethylsiloxane) and can be covalently bound within a knife-coated film by means of a cross-linker like HMS-V301 (25-35% methylhydrosiloxane-dimethylsiloxane copolymer; viscosity 25-35 cSt.) and a UV-curing platinum-catalyst like e.g. (trimethyl)methylcyclopentadienylplatinum(IV).

The subject-matter of the present application is further described by the following items:
1. A cross-linked polymer, comprising
   at least one detector group,
   at least one ionic group, and
   optionally at least one hydrophilic group.
2. The cross-linked polymer according to item 1, comprising
   at least one detector group,
   at least one ionic group, and
   at least one hydrophilic group.
3. The cross-linked polymer according to any one of the preceding items, wherein the cross-linked polymer is a polyolefin, polyester, polyurethane, polyetherketone, polysiloxane, polythiourethane, polyamide, polytriazole, poly(meth)acrylate, polystyrene or polyvinylimidazole homo- or copolymer or conjugated polymer, such as a polyphenylene, polythiophene, polythienothiophene, polyfluorene, polycarbazole, polybenzothiadiazole or polyrylene diimide homo- or copolymer.
4. The cross-linked polymer according to any one of the preceding items, wherein the cross-linked polymer has a swelling capacity of 10 to 70%, preferably 40 to 60%, in water at 20°C, based on the total dry weight of the cross-linked polymer.
5. The cross-linked polymer according to any one of the preceding items, wherein the detector group is capable of indicating the presence of an analyte.
6. The cross-linked polymer according to item 5,
   wherein the analyte is a gas, an organic or inorganic acid or an organic or inorganic base, in particular HCCOH, CH₃COOH, HCl, CO₂, CO, O₂, H₂S, volatile amines, in particular NH₃ or NMe₃, or/and SO₂.
7. The cross-linked polymer according to any one of the preceding items, wherein the detector group is a luminescent, isotropic or anisotropic fluorescent, phosphorescent, light-absorbing or polarizing group.
8. The cross-linked polymer according to any one of the preceding items, wherein the detector group comprises a dye, in particular a gas-responsive and/or pH-responsive dye.
9. The cross-linked polymer according to any one of the preceding items, wherein the detector group comprises a compound selected from m-cresol purple, thymolphthalein, o-cresolphthalein, carboxylfluorescein, 4-methylumbelliferone, bromothymol blue, 5'- and 6'-carboxyseminaphthofluorescein (c-SNAFL), 5'- and 6'-carboxyseminaphtholrhodafluorescein (c-SNARF), cresol red, 2-(2,4-dinitrophenylazo)-1-naphthol-3,6-disulfonic acid, 7-hydroxycoumarin-4-acetic acid, tris(thenoyltrifluoroacetonato)europium (III), 1-hydroxypyrene-3,6,8-trisulfonic acid, neutral red, phenol red, rhodamine 6G, sulforhodamine 101, thymol blue, texas red hydrazide, bromophenol blue, bromocresol green, bromocresol purple, eosin Y, 2',7'-dichlorofluorescein, oregon green, 3-substituted 7-hydroxycoumarin and a salt or derivative thereof.
10. The cross-linked polymer according to any one of the preceding items, wherein the ionic group comprises an anionic group, in particular a carboxylate, phosphonate or sulfonate group, or a cationic group, in particular a quaternized nitrogen or phosphorus bearing group.
11. The cross-linked polymer according to any one of the preceding items, wherein the ionic group is selected from imidazolinium, imidazolium, pyrazolium, pyrrolium, pyrrolidinium, piperidinium, pyridinium, pyrimidinium, amidinium, guanidinium, ammonium and phosphonium.
12. The cross-linked polymer according to any one of the preceding items, wherein the hydrophilic group comprises at least one primary, secondary or tertiary amine, hydroxy, C₁-C₄-alkoxy, poly(C₁-C₆-alkylenoxide), such as polyethylene glycol, polypropylene glycol, carboxylic acid, sulfinic acid, or sulfonic acid group.
13. The cross-linked polymer according to any one of the preceding items, which is in the form of a particle, a film or a membrane.
14. A method for preparing a cross-linked polymer according to items 1-13 by polymerizing
   (i) at least one monomer according to Formula I

      W(-R⁴(-A)ₙ)ₘ,
   (ii) at least one monomer according to Formula II

      X(-R⁴(-A)ₙ)ₘ,
   (iii) optionally at least one monomer according to Formula III

      R⁵(-R⁴(-A)ₙ)ₘ,
   (iv) optionally at least one monomer according to Formula IV

      Y(-R⁴(-A)ₙ)ₘ and
   (v) optionally at least one monomer according to Formula V

      Z(-R⁴(-A)ₙ)ₘ,
   wherein
   A is a polymerizable group each independently selected from 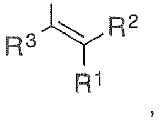 -N=C=O, -N=C=S, -Si(O-R⁶)₃, -Si(R⁶)₂H, -C(O)Cl, -C(O)OR⁶, -B(OR⁶)₂, -NH-R⁶, -OH, halogen, -C≡C-R⁶ and -N₃,
   n and m are each independently an integer from 1 to 4,
   R¹ to R³ are each independently selected from H, C₁-C₁₀-alkyl and C₃-C₁₀-cycloalkyl,
   R₄ is a chemical bond or a di- to pentavalent organic group selected from C₁-C₁₀-alkyl, C₃-C₁₀-cycloalkyl, C₂-C₁₀-heterocyclyl, C₆-C₁₄-aryl, C₅-C₁₀-heteroaryl, C₇-C₁₂-alkylaryl, -C(O)-, -C(O)O-, -C(O)NR⁶-, -SO₂- and -SO-, optionally substituted with C₁-C₁₀-alkyl or C₂-C₁₀-heterocyclyl,
   R⁵ is selected from H, halogen, C₁-C₁₀-alkyl, C₁-C₁₀-haloalkyl, C₃-C₁₀-cycloalkyl, C₂-C₁₀-heterocyclyl, C₆-C₁₀-aryl, C₅-C₁₀-heteroaryl, C₇-C₁₂-alkylaryl, nitrile, -CH₂OR⁶, -C(O)R⁶, -C(O)OR⁶, -C(O)NR⁶R⁷, -S(O)NR⁶R⁷ and -S(O)₂NR⁶R⁷
   R⁶ and R⁷ are each independently selected from H, C₁-C₁₀-alkyl and C₁-C₁₀-haloalkyl or R⁶ and R⁷ together with the nitrogen atom form a 5-8-membered ring, optionally containing up to 2 heteroatoms,
   W comprises at least one detector group,
   X comprises at least one ionic group or at least one precursor of an ionic group,
   Y comprises at least one cross-linkable group,
   Z comprises at least one hydrophilic group.
15. The method according to item 14 for preparing a cross-linked polymer by polymerizing
   (i) at least one monomer according to Formula I,
   (ii) at least one monomer according to Formula II,
   (iii) at least one monomer according to Formula III,
   (iv) at least one monomer according to Formula IV and
   (v) at least one monomer according to Formula V,
   wherein Formulae I to V are defined according to item 14.
16. The method according to item 14 or 15,
   wherein the precursor of the ionic group comprises a neutral group, which is converted to an ionic group by chemical conversion, such as (de)protonation or alkylation.
17. The method according to any one of items 14-16,
   wherein the cross-linkable group comprises at least one vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group.
18. The method according to any one of items 14-17,
   wherein the monomer according to Formula IV is selected from 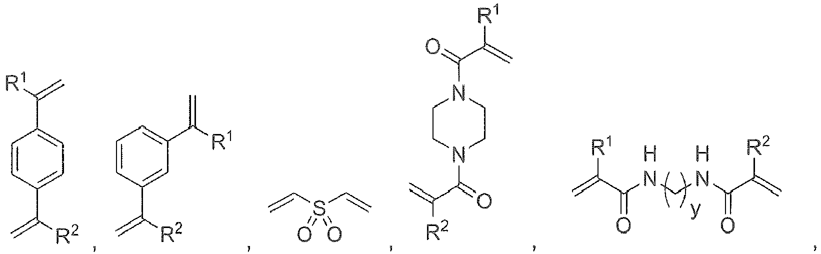 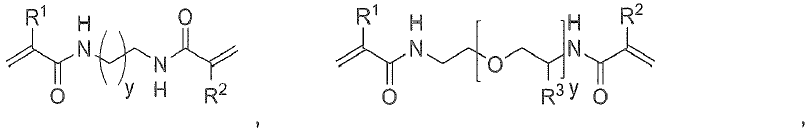 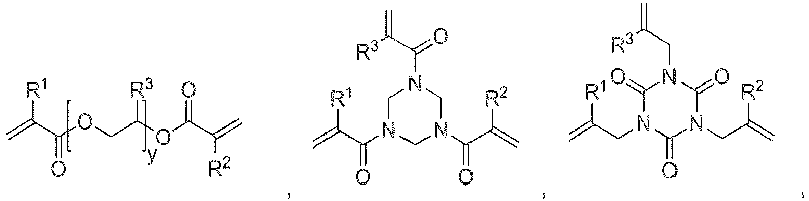 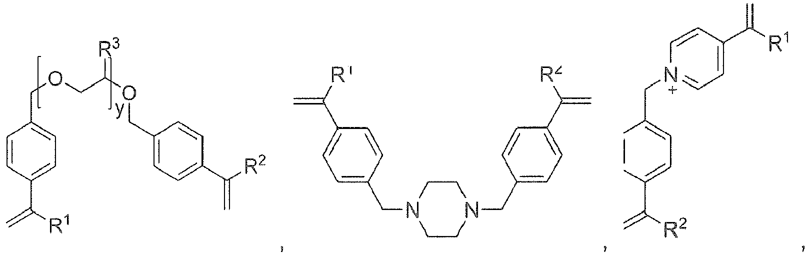 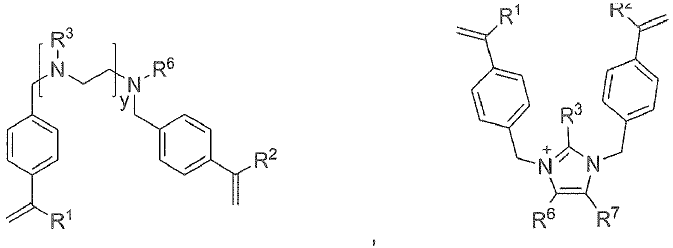 and 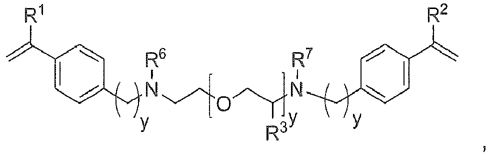 wherein
   R¹, R², R³, R⁶ and R⁷ are each independently as defined above and
   y is an integer from 1 to 20, preferably 1 to 5, more preferably 1 to 4, even more preferably 1.
19. The method according to any one of items 14-18,
   wherein the monomer according to Formula I is present in a molar amount of 0.001-2%, preferably 0.01-1%, based on the overall molar amount of monomers forming the cross-linked polymer.
20. The method according to any one of items 14-19,
   wherein the monomer according to Formula II is present in a molar amount of 0.001-90%, preferably 0.01-80%, based on the overall molar amount of monomers forming the cross-linked polymer.
21. The method according to any one of items 14-20,
   wherein the monomer according to Formula III is present in a molar amount of 0-90%, preferably 20-80%, more preferably 60-75%, based on the overall molar amount of monomers forming the cross-linked polymer.
22. The method according to any one of items 14-21,
   wherein the monomer according to Formula IV is present in a molar amount of 0-15%, preferably 0.01-12%, more preferably 4-10%, based on the overall molar amount of monomers forming the cross-linked polymer.
23. The method according to any one of items 14-22,
   wherein the monomer according to Formula V is present in a molar amount of 0-20%, preferably 0.01-15%, more preferably 4-10%, based on the overall molar amount of monomers forming the cross-linked polymer.
24. The method according to any one of items 14-23,
   wherein polymerization is radical, cationic, anionic, transition metal catalyzed, condensation or addition polymerization, in particular in bulk, solution, dispersion or emulsion.
25. A polymer composition comprising
   at least one detector group,
   at least one ionic group and
   optionally at least one hydrophilic group.
26. Use of the cross-linked polymer according to items 1-13 or the polymer composition according to item 25 as a sensor, particularly for detecting analytes, such as an organic or inorganic acid, an organic or inorganic base or a gas, in particular HCOOH, CH₃COOH, HCl, CO₂, CO, volatile amines, in particular NH₃ or NMe₃, or/and SO₂.
27. An analyte sensor assembly comprising
   a) the cross-linked polymer according to any one of items 1-13 or the polymer composition according to item 25 and
   b) a hydrophobic matrix polymer.
28. The analyte sensor assembly according to item 27,
   wherein the analyte is an organic or inorganic acid, an organic or inorganic base or a gas, in particular HCOOH, CH₃COOH, HCl, CO₂, CO, volatile amines, in particular NH₃ or NMe₃, or/and SO₂.
29. The analyte sensor assembly according to item 27 or 28,
   further comprising a support material, in particular a woven or non-woven material, a mesh material or a natural or synthetic particle.
30. The analyte sensor assembly according to any one of items 27-29,
   wherein the hydrophobic matrix polymer is analyte-permeable and preferably ion-impermeable.
31. The analyte sensor assembly according to any one of items 27-30,
   wherein the hydrophobic matrix polymer is selected from a fluorine-containing polymer, silicone, polyurethane, ethylcellulose, polybutadiene, polyvinyl methylketone, polyvinyl chloride, poly(trimethylsilyl)propyne, poly-t-butylstyrene, polystyrene, poly-4-methylstyrene, poly-alpha-methylstyrene, cellulose acetate butyrate and polyisoprene.
32. The analyte sensor assembly according to any one of items 27-31,
   wherein the cross-linked polymer or polymer composition is embedded in the hydrophobic matrix polymer.
33. The analyte sensor assembly according to items 27-32,
   wherein the cross-linked polymer or polymer composition is covalently bound to the hydrophobic matrix polymer.
34. The analyte sensor assembly according to any one of items 27-33,
   wherein the cross-linked polymer or polymer composition is present in an amount of 0.01-30 wt.%, preferably 20-30 wt.%, more preferably 10-28 wt.% and even more preferably 15-25 wt.%, based on the total amount of the cross-linked polymer or polymer composition and the hydrophobic matrix polymer.
35. The analyte sensor assembly according to any one of items 27-34, having a thickness of 2 to 500 µm, more preferably of 5 to 300 µm, even more preferably of 10 to 150 µm and most preferably of up to 100 µm.
36. A method for producing the analyte sensor assembly according to items 27-35, comprising the steps of
   (1) providing the cross-linked polymer according to items 1-13 and/or the polymer composition according to item 25,
   (2) contacting the cross-linked polymer or polymer composition of step (1) with a hydrophobic matrix monomer or prepolymer and
   (3) polymerizing and/or cross-linking the hydrophobic matrix monomer and/or prepolymer.
37. The method according to item 36,
   comprising a further step (1 a) and optionally (1 b) before step (2) of
   (1a) activating the cross-linked polymer and/or polymer composition, e.g. by plasma treatment, in particular by low pressure oxygen plasma or argon plasma,
   (1 b) modifying the activated cross-linked polymer and/or polymer composition with a functional group, which is capable of reacting with the hydrophobic matrix, the hydrophobic matrix monomer and/or prepolymer.
38. Use of the analyte sensor assembly according to any one of items 27-35 for detecting the presence of an analyte.

## Claims

1. A cross-linked polymer, comprising
at least one detector group,
at least one ionic group, and
optionally at least one hydrophilic group.

2. The cross-linked polymer according to claim 1,
wherein the cross-linked polymer is a polyolefin, polyester, polyurethane, polyetherketone, polysiloxane, polythiourethane, polyamide, polytriazole, poly(meth)acrylate, polystyrene or polyvinylimidazole homo- or copolymer or conjugated polymer, such as a polyphenylene, polythiophene, polythienothiophene, polyfluorene, polycarbazole, polybenzothiadiazole or polyrylene diimide homo- or copolymer.

3. The cross-linked polymer according to any one of the preceding claims,
wherein the detector group is a luminescent, isotropic or anisotropic fluorescent, phosphorescent, light-absorbing or polarizing group.

4. The cross-linked polymer according to any one of the preceding claims,
wherein the detector group comprises a dye, in particular a gas-responsive and/or pH-responsive dye.

5. The cross-linked polymer according to any one of the preceding claims,
wherein the ionic group comprises an anionic group, in particular a carboxylate, phosphonate or sulfonate group, or a cationic group, in particular a quaternized nitrogen or phosphorus bearing group.

6. The cross-linked polymer according to any one of the preceding claims,
wherein the hydrophilic group comprises at least one primary, secondary or tertiary amine, hydroxy, C₁-C₄-alkoxy, poly(C₁-C₆-alkylenoxide), such as polyethylene glycol or polypropylene glycol, carboxylic acid, sulfinic acid or sulfonic acid group.

7. A method for preparing a cross-linked polymer according to claims 1-6 by polymerizing
(vi) at least one monomer according to Formula I
W(-R⁴(-A)ₙ)ₘ,
(vii) at least one monomer according to Formula II
X(-R⁴(-A)ₙ)ₘ,
(viii) optionally at least one monomer according to Formula III
R⁵(-R⁴(-A)ₙ)ₘ,
(ix) optionally at least one monomer according to Formula IV
Y(-R⁴(-A)ₙ)ₘ and
(x) optionally at least one monomer according to Formula V
Z(-R⁴(-A)ₙ)ₘ,
wherein
A is a polymerizable group each independently selected from 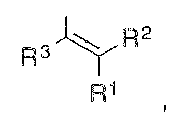 -N=C=O, -N=C=S, -Si(O-R⁶)₃, -Si(R⁶)₂H, -C(O)Cl, -C(O)OR⁶, -B(OR⁶)₂, -NH-R⁶, -OH, halogen, -C≡C-R⁶ and -N₃,
n and m are each independently an integer from 1 to 4,
R¹ to R³ are each independently selected from H, C₁-C₁₀-alkyl and C₃-C₁₀-cycloalkyl,
R₄ is a chemical bond or a di- to pentavalent organic group selected from C₁-C₁₀-alkyl, C₃-C₁₀-cycloalkyl, C₂-C₁₀-heterocyclyl, C₆-C₁₄-aryl, C₅-C₁₀-heteroaryl, C₇-C₁₂-alkylaryl, -C(O)-, -C(O)O-, -C(O)NR⁶-, -SO₂- and -SO-, optionally substituted with C₁-C₁₀-alkyl or C₂-C₁₀-heterocyclyl,
R⁵ is selected from H, halogen, C₁-C₁₀-alkyl, C₁-C₁₀-haloalkyl, C₃-C₁₀-cycloalkyl, C₂-C₁₀-heterocyclyl, C₆-C₁₀-aryl, C₅-C₁₀-heteroaryl, C₇-C₁₂-alkylaryl, nitrile, -CH₂OR⁶, -C(O)R⁶, -C(O)OR⁶, -C(O)NR⁶R⁷, -S(O)NR⁶R⁷ and -S(O)₂NR⁶R⁷
R⁶ and R⁷ are each independently selected from H, C₁-C₁₀-alkyl and C₁-C₁₀-haloalkyl or R⁶ and R⁷ together with the nitrogen atom form a 5-8-membered ring, optionally containing up to 2 heteroatoms,
W comprises at least one detector group,
X comprises at least one ionic group or at least one precursor of an ionic group,
Y comprises at least one cross-linkable group,
Z comprises at least one hydrophilic group.

8. The method according to claim 7,
wherein the precursor of the ionic group comprises a neutral group, which is converted to an ionic group by chemical conversion, such as (de)protonation or alkylation.

9. The method according to claim 7 or 8,
wherein the cross-linkable group comprises at least a vinyl, vinylidene, allyl, isocyanato, cyanato, thiocyanato, styryl, hydroxyl, amine, carboxy, acryl, (C₁-C₁₀-alkyl)acryl, alkyne, azide, boronic acid ester, halogen, trialkoxysilane or silane group.

10. A polymer composition comprising
at least one detector group,
at least one ionic group and
optionally at least one hydrophilic group.

11. Use of the cross-linked polymer according to claims 1-6 or the polymer composition according to claim 10 as a sensor, particularly for detecting analytes, such as an organic or inorganic acid, an organic or inorganic base or a gas, in particular HCOOH, CH₃COOH, HCl, CO₂, CO, volatile amines, in particular NH₃ or NMe₃, or/and SO₂.

12. An analyte sensor assembly comprising
a) the cross-linked polymer according to any one of claims 1-6 or the polymer composition according claim 10 and
b) a hydrophobic matrix polymer.

13. The analyte sensor assembly according to claim 12,
wherein the hydrophobic matrix polymer is analyte-permeable and preferably ion-impermeable, even more preferably the hydrophobic matrix polymer is selected from a fluorine-containing polymer, silicone, polyurethane, ethylcellulose, polybutadiene, polyvinyl methylketone, polyvinyl chloride, poly(trimethylsilyl)propyne, poly-t-butylstyrene, polystyrene, poly-4-methylstyrene, poly-alpha-methylstyrene, cellulose acetate butyrate and polyisoprene.

14. The analyte sensor assembly according to claims 12 and 13,
wherein the cross-linked polymer or polymer composition is covalently bound to the hydrophobic matrix polymer.

15. A method for producing the analyte sensor assembly according to claims 12-14, comprising the steps of
(1) providing the cross-linked polymer according to claims 1-6 and/or the polymer composition according to claim 10,
(2) contacting the cross-linked polymer or polymer composition of step (1) with a hydrophobic matrix monomer or prepolymer and
(3) polymerizing and/or cross-linking the hydrophobic matrix monomer and/or prepolymer.
